# EUROPÄISCHE PATENTSCHRIFT

(11) **EP 3 044 853 B1**
(45) Veröffentlichungstag und Bekanntmachung des Hinweises auf die Patenterteilung: **28.03.2018**
(21) Anmeldenummer: 14799693.8
(22) Anmeldetag: 06.11.2014
(51) Int. Cl.: B29C 35/08, H01B 3/40, H02K 3/30, H02K 3/493, H02K 15/00

(54) **NUTVERSCHLUSSMASSE, NUTVERSCHLUSS UND VERFAHREN ZUM HERSTELLEN EINES NUTVERSCHLUSSES**
SLOT SEALING COMPOUND, SLOT SEAL, AND A METHOD FOR PRODUCING A SLOT SEAL
MATIÈRE D'OBTURATION DE GORGE, OBTURATION DE GORGE ET PROCÉDÉ DE RÉALISATION D'UNE OBTURATION DE GORGE

(30) Priorität: 14.11.2013 EP 13192857
(43) Veröffentlichungstag der Anmeldung: 20.07.2016
(73) Patentinhaber: Siemens Aktiengesellschaft, 80333 München (DE)
(72) Erfinder: HUBER, Jürgen, 91058 Erlangen (DE); KLAUSSNER, Bernhard, 90408 Nürnberg (DE); SCHIRM, Dieter, 96149 Breitengüßbach (DE)
(86) Internationale Anmeldenummer: PCT/EP2014/073868
(87) Internationale Veröffentlichungsnummer: WO 2015/071153

(56) Entgegenhaltungen:
- EP-A1- 1 754 733
- EP-A1- 2 365 491
- CN-A- 101 906 237
- US-A- 6 001 428
- US-A1- 2009 023 843

## Beschreibung

Die Erfindung betrifft eine Nutverschlussmasse für eine elektrische Maschine, die zur Aufnahme einer elektrischen Leiteranordnung mindestens eine Nut mit einer Nutöffnung aufweist, enthaltend einen Magnetfüllstoff, insbesondere einen weichmagnetischen Füllstoff, sowie eine Reaktionsharzmischung, die mindestens eine Harz-Komponente aufweist. Die Erfindung betrifft weiterhin einen Nutverschluss sowie ein Verfahren zum Herstellen eines Nutverschlusses für eine elektrische Maschine.

Die Nuten von elektrischen Maschinen dienen zur Aufnahme von isolierten elektrischen Leitern bzw. Leiteranordnungen. Sie weisen im Regelfall eine Nutöffnung auf, über welche die Leiter bzw. Leiteranordnung in die Nut eingelegt wird. Insbesondere bei Hochspannungsmaschinen wird mit sogenannten "offenen Nuten" gearbeitet, wobei die Nutöffnung sich über die komplette Nutbreite erstreckt. Die Nutöffnung muss daher nach dem Einlegen des elektrischen Leiters bzw. der Leiteranordnung verschlossen werden, um ein Aufsteigen der Leiter aus der Nut während des Betriebs der elektrischen Maschine zu verhindern.

Der Nutverschluss für solche Nutöffnungen wird üblicherweise mit festen Verschlusskörpern, sogenannten Nutkeilen, ausgeführt. Diese Nutkeile sind z.B. aus technischen Schichtpressstoffen durch mechanische Bearbeitung gefertigt. Alternativ können sie aus thermoplastischen oder duroplastischen Formmassen durch Strangextrusion oder Spritzguss gefertigt sein.

Um die magnetische Flussführung im Bereich der Nutöffnung zu verbessern, sind die Nutverschlüsse z.B. teilweise weichmagnetisch ausgeführt. Dabei sind die Nutverschlüsse in Form von Nutkeilen, aus mit Eisen gefüllten Schichtpressstoffen ausgeführt. Ein solcher weichmagnetischer Nutverschluss wird allerdings üblicherweise mit der Nut verklebt, um einen guten Haftsitz zu erreichen. Ansonsten besteht die Gefahr, dass der Nutkeil sich durch die Betriebsbelastungen (thermische Belastung, thermomechanische Wechselbelastung, magnetische Wechselbelastung, Umwelteinflüsse) löst. Diese Verklebung ist nur mit erheblichem Aufwand prozesssicher ausführbar.

Ein vorgefertigter Verschlusskörper, der als Nutverschluss eingesetzt wird, ist z.B. in der WO 2006/100291 A1 beschrieben. Der Verschlusskörper besteht dabei aus einem Material mit einem thermoplastischen Polymermaterial und einem Magnetfüllstoff.

Eine weitere Form des weichmagnetischen Nutverschlusses sind mit Eisenpulver gefüllte, härtbare Epoxidharze, wie sie z.B. in den Offenlegungsschriften DE 1 288 186 und DE 1 299 357 beschrieben sind. Die Epoxidharze werden als pastenförmige Massen in die Nutöffnung eingedrückt und anschließend thermisch gehärtet. Ein solcher Nutverschluss zeichnet sich gegenüber den weichmagnetischen Keilen durch einen dauernden Haftsitz aus.

Aus der CN 101 906 237 A ist eine Nutverschlussmasse für eine elektrische Maschine bekannt, die zur Aufnahme einer elektrischen Leiteranordnung mindestens eine Nut mit einer Nutöffnung aufweist, wobei eine Harzkomponente, ein Füllstoff aus Eisenoxid und Eisen mit einem 2- Methyl - Imidazol als Härter zu einer Reaktionsharzmischung für die Nutverschlussmasse miteinander vermischt werden.

Der Erfindung liegt die Aufgabe zugrunde, einen verbesserten, härtbaren, magnetischen Nutverschluss anzugeben.

Die Aufgabe wird erfindungsgemäß gelöst durch eine Nutverschlussmasse für eine elektrische Maschine, die zur Aufnahme einer elektrischen Leiteranordnung mindestens eine Nut mit einer Nutöffnung aufweist, enthaltend einen Magnetfüllstoff, insbesondere einen weichmagnetischen Füllstoff, und eine Reaktionsharzmischung, die mindestens eine Harz-Komponente aufweist, wobei die Nutverschlussmasse weiterhin einen Katalysator enthält, der zur Beschleunigung einer kationischen Polymerisation der Reaktionsharzmischung vorgesehen ist, wobei der Magnetfüllstoff bei Umgebungstemperatur den Katalysator bindet oder hemmt.

Vorzugsweise ist der Katalysator ein Stoff aus mindestens einer der Gruppen der organischen Ammonium-, Sulphonium-, Phosphonium- oder Imidazolium-Salze oder eine Mischung enthaltend mindestens eines dieser Salze.

Unter Magnetfüllstoff ist hierbei auch ein Magnetfüllstoffgemisch zu verstehen. Mit Katalysator wird ggf. auch eine Katalysatormischung bezeichnet.

Die Erfindung basiert auf der Überlegung, eine 1-komponentige Reaktionsharzmischung für den Einsatz in der Nutverschlussmasse vorzusehen, welche durch eine kationische Polymerisation gehärtet wird. Die Reaktionsharzmischung besteht somit lediglich aus einer oder mehrerer Harz-Komponenten, die beim Einsatz der Nutverschlussmasse als Nutverschluss fortlaufend an ein wachsendes Polymer angegliedert werden. Eine kationische Polymerisation der mindestens einen Harz-Komponente wird ermöglicht und beschleunigt durch den Katalysator (oder die Katalysatormischung), der in der Nutverschlussmasse beigemischt ist. Gemessen an der Reaktionsharzmischung weist der Katalysator einen Gewichtsanteil von höchstens 5 Gew.-% auf, insbesondere beträgt der Gewichtsanteil des Katalysators weniger als 1 Gew.-% der Reaktionsharzmischung.

Der wesentliche Vorteil einer solchen Nutverschlussmasse, die auf Basis einer kationischen Polymerisation gehärtet wird, ist dass die fertige Nutverschlussmasse bei Umgebungstemperatur lange Lagestabilitäten von mehreren Wochen aufweist. Selbst bei erhöhten Temperaturen von 35°c bis 45°C sind Lagerzeiten von mehreren Tagen bis Wochen möglich. Auch bei erhöhter Luftfeuchtigkeit, d.h. über der durchschnittlichen atmosphärischen Luftfeuchtigkeit ist die Nutverschlussmasse mehrere Tage lagerstabil. Somit eignet sich die Nutverschlussmasse für Lagerung und Transport als Fertigmischung, die eingesetzt wird, ohne dass der Zusatz von weiteren Komponenten am Einsatzort notwendig ist.

Die Reaktionsharzmischung eignet sich hierbei für einen Anwendungstemperaturbereich über 155°C, somit lässt sich problemlos die Wärmeklasse F abdecken, ggf. auch höhere Wärmeklassen.

Zweckdienlicherweise ist die Harz-Komponente der Reaktionsharzmischung ein Epoxidharz. Ein Epoxidharz eignet sich besonders für eine mehrfache Aneinanderreihung von Epoxid-Gruppen, d.h. für eine Polymerisation. Der kationischen Polymerisation von Epoxidharzen liegt eine thermisch- oder strahlungsinitiierte Ringöffnungspolymerisation zugrunde. Als Initiatoren dienen hier Substanzen, die durch Thermolyse oder Photolyse sehr starke Säuren bilden, welche die oben beschriebene Polymerisation starten Vorteile der Polymerisation der Reaktionsharzmischung sind Luftunempfindlichkeit bei der Härtung, geringer Schrumpf und daraus resultierend bessere Haftung auf Metallen sowie eine Nachhärtung im Dunkeln.

Der Magnetfüllstoff und der Katalysator sind derart ausgewählt, dass der Magnetfüllstoff bei Umgebungstemperatur den Katalysator bindet oder hemmt und die Initiierung erst nach einer Temperatur- und/oder Strahlungsbehandlung, insbesondere mit UV-Licht, erfolgt, was die Härtung des Nutverschlusses bewirkt. Ergänzend zum Magnetfüllstoff als Katalysator-Hemmer enthält die Nutverschlussmasse einen Zusatzstoff, der bei Umgebungstemperatur den Katalysator bindet oder hemmt, so dass die Härtung des Nutverschlusses ebenfalls bei den im Zusammenhang mit dem Magnetfüllstoff beschriebenen Bedingungen erfolgt. Geeignet hierfür sind z.B. Kieselsäure, Aluminiumtrihydrat, Magnesiumhydroxid usw.

Die Nutverschlussmasse ist auch bei offener Lagerung in feuchtem Klima, d.h. bei einer Luftfeuchtigkeit höher als 50%, lagerstabil. Aufgrund ihrer chemischen Zusammensetzung wird in die Nutverschlussmasse i.d.R. kein Wasser aufgenommen. Ebenso ist auf Grund der chemischen Zusammensetzung der Nutverschlussmasse eine Härtungstemperatur ab ca. 70°C möglich.

Nach einer bevorzugten Ausführungsvariante enthält die Nutverschlussmasse zudem organische und/oder anorganische Nanopartikel, insbesondere Core-Shell-Nanopartikel oder anorganische Nanopartikel auf SiO₂-Basis. Die Nanopartikel verbessern insbesondere das Fließverhalten der Reaktionsharzmischung und die Schlagzähigkeit des gehärteten Nutverschlusses.

Gemäß einer weiteren bevorzugten Ausführungsvariante weist die Nutverschlussmasse eine Glasübergangstemperatur von mindestens 180°C auf. Dies ist vorteilhaft, da mit dem Überschreiten der Glasübergangstemperatur eine deutliche Veränderung der mechanischen und elektrischen Eigenschaften einhergeht. Um den Einsatz des Nutverschlusses bei möglichst hohen Temperaturen zu ermöglichen, wird somit durch die Zusammensetzung der Nutverschlussmasse eine Glasübergangstemperatur von 180°C oder mehr eingestellt.

Im Hinblick auf eine hohe magnetische Permeabilität des Nutverschlusses ist vorgesehen, dass in der Nutverschlussmasse der Magnetfüllstoff oder das Magnetfüllstoffgemisch vorzugsweise einen Anteil von mindestens 85 Gew.-% aufweist.

Darüber hinaus wird ein höherer Anteil des Magnetfüllstoffs erreicht, indem der Magnetfüllstoff vorteilhafterweise in Form von bimodalen bis multimodalen Partikelgrößenverteilungen vorliegt. Dies bedeutet, dass der Magnetfüllstoff mindestens zwei Partikelgrößenverteilungen aufweist, wobei die kleineren Partikel insbesondere die Zwischenräume zwischen den größeren Partikeln ausfüllen. Auf diese Weise wird eine möglichst hohe Packungsdichte ermöglicht, welche wiederum in eine hohe Permeabilität resultiert. Der Magnetfüllstoff enthält ein Eisenpulver, insbesondere ein Schwammeisenpulver oder ein Carbonyleisenpulver. Das Eisenpulver hat eine mittlere Partikelgröße zwischen etwa 40 µm und 500 µm, insbesondere von etwa 200 µm bis 300 µm. Grundsätzlich sind aber auch Partikelgrößen kleiner als 40 µm bzw. größer als 500 µm möglich.

Weiterhin von Vorteil ist, dass die Nutverschlussmasse zweckdienlicherweise faserige Füllstoffe mit einer Faserlänge von 50 µm bis 10000 µm, insbesondere von 100 µm bis 5000 µm, insbesondere von 100 µm bis 3000 µm, enthält. Solche faserige Füllstoffe bewirken eine Erhöhung der mechanischen Festigkeit. Als faserige Füllstoffe werden beispielsweise anorganische Fasern wie Glasfasern bzw. auch organische Fasern wie Aramidfasern verwendet. Zudem sind auch beliebige Fasermischungen möglich.

Bevorzugt weist die Nutverschlussmasse eine Lagerstabilität über mehrere Tage bei einer Temperatur bis 45° und/oder einer erhöhten Luftfeuchtigkeit von über 50% auf.

Die Aufgabe wird weiterhin erfindungsgemäß gelöst durch einen Nutverschluss einer elektrischen Maschine aus einer Nutverschlussmasse nach einer der oben beschriebenen Ausführungen.

Die Aufgabe wird zudem erfindungsgemäß gelöst durch ein Verfahren zum Herstellen eines Nutverschlusses für eine elektrische Maschine, die zur Aufnahme einer elektrischen Leiteranordnung mindestens eine Nut mit einer Nutöffnung aufweist, wobei eine Reaktionsharzmischung umfassend mindestens eine Harz-Komponente, einen Magnetfüllstoff, insbesondere einen weichmagnetischen Füllstoff, der bei Umgebungstemperatur den Katalysator bindet oder hemmt und einen Katalysator, der zur Beschleunigung einer kationischen Polymerisation der Reaktionsharzmischung vorgesehen ist, zu einer Nutverschlussmasse (7) miteinander vermischt werden.

Die in Bezug auf die Nutverschlussmasse bereits angeführten Vorteile und bevorzugten Ausgestaltungen lassen sich sinngemäß auf den Nutverschluss sowie auf das Verfahren zum Herstellen eines Nutverschlusses übertragen.

Bevorzugt wird die Leiteranordnung in die Nut eingebracht und die Nutverschlussmasse wird zum Verschluss der Nutöffnung eingesetzt und anschließend wärmebehandelt, um die kationische Polymerisation zu initiieren.

Vorteilhafterweise wird nach dem Einsetzen der Nutverschlussmasse in die Nut im Hinblick auf eine oberflächliche Anhärtung zunächst lediglich die Oberfläche der Nutverschlussmasse wärme- und/oder UV-behandelt. Bevorzugt wird hierbei die Oberfläche der Nutverschlussmasse erst durch UV-Licht angehärtet, wobei die tieferen Schichten der Nutverschlussmasse noch nicht polymerisiert sind. Durch diesen Verfahrensschritt wird eine Formstabilität der Nutverschlussmasse vor der vollständigen kationischen Polymerisation gewährleistet.

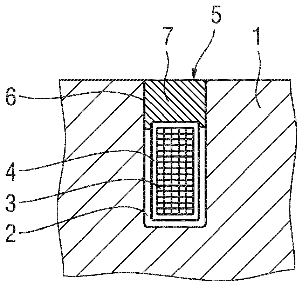

Ein Ausführungsbeispiel der Erfindung wird anhand einer Zeichnung näher erläutert. Hierin zeigt die einzige Figur ein Ausführungsbeispiel eines Stators einer elektrischen Maschine mit einem magnetischen Nutverschluss.

In der Figur ist ein Ausführungsbeispiel eines Stators 1 einer elektrischen Maschine in einem Teilquerschnitt gezeigt. Der Stator 1 umfasst eine Nut 2, in der eine elektrische Leiteranordnung 3 platziert ist. Die nur schematisch gezeigte Leiteranordnung 3 kann als elektrische Einzel-Leiter oder auch als Kombination mehrerer elektrischer Teil-Leiter ausgeführt sein. Sie ist mit einer elektrischen Isolierung 4 umgeben und ist Teil einer Spulenwicklung des Stators 1. Grundsätzlich können die Nut 2 und die Leiteranordnung 3 anstelle im Stator 1 auch in einem Rotor der elektrischen Maschine vorgesehen sein.

Im Bereich einer Nutöffnung 5 ist innerhalb der Nut 2 ein Nutverschluss 6 angeordnet. Der Nutzverschluss ist aus einer Nutverschlussmasse 7 ausgebildet, die einen weichmagnetischen Füllstoff sowie eine Reaktionsharzmischung enthält. Die Reaktionsharzmischung ist zumindest aus einer Harzkomponente, im gezeigten Ausführungsbeispiel ein Epoxidharz, und einem Katalysator für eine kationische Polymerisation des Epoxidharzes, zusammengesetzt, wobei der Magnetfüllstoff und der Katalysator derart ausgewählt sind, dass der Magnetfüllstoff bei Umgebungstemperatur den Katalysator bindet oder hemmt. Die Nutverschlussmasse 7 kann zudem organische und/oder anorganische Nanopartikel sowie faserige Füllstoffe enthalten.

Der Anteil des Magnetfüllstoffs in der Nutverschlussmasse 7 beträgt mindestens 85 Gew.-%. Der Anteil des Katalysators an der Reaktionsharzmischung beträgt höchstens 5 Gew.-%, insbesondere beträgt der Gewichtsanteil des Katalysators weniger als 1 Gew.-% der Reaktionsharzmischung.

Die Komponenten der Nutverschlussmasse 7 bilden eine Fertigmischung, die bei Raumtemperatur und/oder gleichzeitiger hoher Luftfeuchtigkeit lagerstabil ist. Auch bei erhöhter Lufttemperatur, z.B. bei 45°C, ist die Fertigmischung mehrere Tage bis Wochen lagerstabil und ihre Komponenten reagieren bezogen auf Verarbeitungs- und Endeigenschaften nicht nachteilig miteinander. Somit kann die Fertigmischung über Zeiträumen von mehreren Tagen oder Wochen gelagert und transportiert werden. Im gezeigten Ausführungsbeispiel wird die Nutverschlussmasse am Einsatzort, nachdem sie in die Nutöffnung 5 eingesetzt ist, zunächst mit UV-Licht behandelt, damit die Oberfläche der Nutverschlussmasse angehärtet wird. Anschließend wird die Nutverschlussmasse 7 einer Wärmebehandlung unterzogen, insbesondere bei einer Härtungstemperatur von 70°C oder höher, damit auch die tieferen Schichten der Nutverschlussmasse 7 polymerisieren.

Eine derart hergestellte Nutverschlussmasse 7 zeichnet sich durch eine hohe Chemikalienbeständigkeit, durch eine hohe Temperaturbeständigkeit sowie mechanische Festigkeit, durch eine hohe magnetische Permeabilität aufgrund des hohen Anteils am Magnetfüllstoff aus. Aufgrund ihrer Zusammensetzung weist die Nutverschlussmasse 7 insbesondere eine Glasübergangstemperatur von über 180°C auf. Der Anwendungsbereich des Nutverschlusses 6 liegt dabei in Wärmeklasse F oder größer, d.h. im Betrieb der elektrischen Maschine kann eine Temperatur von insbesondere 155°C erreicht und ggf. überschritten werden. Darüber hinaus enthält die Nutverschlussmasse keine toxisch kennzeichnungspflichtigen Komponenten.

## Patentansprüche

1. Nutverschlussmasse (7) für eine elektrische Maschine, die zur Aufnahme einer elektrischen Leiteranordnung (3) mindestens eine Nut (2) mit einer Nutöffnung (5) aufweist, enthaltend einen Magnetfüllstoff, insbesondere einen weichmagnetischen Füllstoff, und eine Reaktionsharzmischung, die mindestens eine Harz-Komponente aufweist,
**gekennzeichnet durch** einen Katalysator, der zur Beschleunigung einer kationischen Polymerisation der Reaktionsharzmischung vorgesehen ist, wobei der Magnetfüllstoff bei Umgebungstemperatur den Katalysator bindet oder hemmt.

2. Nutverschlussmasse (7) nach Anspruch 1,
**dadurch gekennzeichnet, dass** der Katalysator ein Stoff aus mindestens einer der Gruppen der organischen Ammonium-, Sulphonium-, Phosphonium- oder Imidazolium-Salze ist.

3. Nutverschlussmasse (7) nach einem der vorhergehenden Ansprüche,
**dadurch gekennzeichnet, dass** der Katalysator einen Massenanteil von höchstens 5 Gew.-%, insbesondere von höchstens 1 Gew.-% der Reaktionsharzmischung aufweist.

4. Nutverschlussmasse (7) nach einem der vorhergehenden Ansprüche,
**dadurch gekennzeichnet, dass** die Harz-Komponente ein Epoxidharz ist.

5. Nutverschlussmasse (7) nach einem der vorhergehenden Ansprüche,
**gekennzeichnet durch** einen Zusatzstoff, der bei Umgebungstemperatur den Katalysator bindet oder hemmt.

6. Nutverschlussmasse (7) nach einem der vorhergehenden Ansprüche,
**gekennzeichnet dadurch, dass** zur Verbesserung insbesondere des Fließverhaltens der Reaktionsmischung und der Schlagzähigkeit des gehärteten Nutverschlusses, die Nutverschlussmasse organische und/oder anorganische Nanopartikel enthält.

7. Nutverschlussmasse (7) nach einem der vorhergehenden Ansprüche,
**gekennzeichnet durch** eine Glasübergangstemperatur von mindestens 180°C.

8. Nutverschlussmasse (7) nach einem der vorhergehenden Ansprüche,
**gekennzeichnet durch** einen Massenanteil am Magnetfüllstoff, der mindestens 85 Gew.-% beträgt.

9. Nutverschlussmasse (7) nach einem der vorhergehenden Ansprüche,
**dadurch gekennzeichnet, dass** der Magnetfüllstoff in Form von bimodalen bis multimodalen Partikelgrößenverteilungen vorliegt.

10. Nutverschlussmasse (7) nach einem der vorhergehenden Ansprüche,
**gekennzeichnet durch** eine Lagerstabilität über mehrere Tage bei einer Temperatur bis 45° und/oder einer Luftfeuchtigkeit von über 50%.

11. Nutverschluss (6) aus einer Nutverschlussmasse (7) nach einem der vorhergehenden Ansprüche.

12. Verfahren zum Herstellen eines Nutverschlusses (6) für eine elektrische Maschine, die zur Aufnahme einer elektrischen Leiteranordnung (3) mindestens eine Nut (2) mit einer Nutöffnung (5) aufweist, wobei eine Reaktionsharzmischung umfassend mindestens eine Harz-Komponente, einen Magnetfüllstoff, insbesondere ein weichmagnetischer Füllstoff, der bei Umgebungstemperatur den Katalysator bindet oder hemmt und einen Katalysator, der zur Beschleunigung einer kationischen Polymerisation der Reaktionsharzmischung vorgesehen ist, zu einer Nutverschlussmasse (7) miteinander vermischt werden.

13. Verfahren nach Anspruch 12,
**dadurch gekennzeichnet, dass** die Leiteranordnung (3) in die Nut (2) eingebracht wird und die Nutverschlussmasse (7) zum Verschluss der Nutöffnung (5) eingesetzt wird und wärmebehandelt wird.

14. Verfahren nach Anspruch 13,
**dadurch gekennzeichnet, dass** nach dem Einsetzen der Nutverschlussmasse (7) in die Nut (2) im Hinblick auf eine oberflächliche Anhärtung zunächst lediglich die Oberfläche der Nutverschlussmasse (7) wärme- und/oder UV-behandelt wird.

15. Verfahren nach einem der Ansprüche 12 bis 14,
**dadurch gekennzeichnet, dass** die Polymerisation der Nutverschlussmasse bei einer Härtungstemperatur ab ca. 70°C erfolgt.

## Claims

1. Slot sealing compound (7) for an electric machine, which has at least one slot (2) with a slot opening (5) for receiving an electric conductor arrangement (3), containing a magnetic filler material, in particular a soft-magnetic filler material, and a reactive resin mixture, which has at least one resin component,
**characterised by** a catalyst, which is provided to accelerate a cationic polymerisation of the reactive resin mixture, wherein the magnetic filler material binds or inhibits the catalyst at an ambient temperature.

2. Slot sealing compound (7) according to claim 1, **characterised in that** the catalyst is a substance from at least one of the groups of organic ammonium, sulphonium, phosphonium or imidazolium salts.

3. Slot sealing compound (7) according to one of the preceding claims,
**characterised in that** the catalyst has a percentage by weight of at most 5 % by weight, in particular of at most 1 % by weight of the reactive resin mixture.

4. Slot sealing compound (7) according to one of the preceding claims,
**characterised in that** the resin component is an epoxy resin.

5. Slot sealing compound (7) according to one of the preceding claims,
**characterised by** an additive, which binds or inhibits the catalyst at an ambient temperature.

6. Slot sealing compound (7) according to one of the preceding claims,
**characterised in that** the slot sealing compound contains organic and/or inorganic nanoparticles for improving in particular the flow properties of the reactive mixture and the impact resistance of the hardened slot seal.

7. Slot sealing compound (7) according to one of the preceding claims,
**characterised by** a glass transition temperature of at least 180°C.

8. Slot sealing compound (7) according to one of the preceding claims,
**characterised by** a percentage by weight of magnetic filler material, which amounts to at least 85 % by weight.

9. Slot sealing compound (7) according to one of the preceding claims,
**characterised in that** the magnetic filler material is present in the form of bimodal to multimodal particle size distributions.

10. Slot sealing compound (7) according to one of the preceding claims,
**characterised by** a storage stability of several days at a temperature of up to 45° and/or an increased air humidity of more than 50%.

11. Slot seal (6) from a slot sealing compound (7) according to one of the preceding claims.

12. Method for producing a slot seal (6) for an electric machine, which has at least one slot (2) with a slot opening (5) for receiving an electric conductor arrangement (3), wherein a reactive resin mixture comprising at least one resin component, one magnetic filler material, in particular a soft-magnetic filler material, which binds or inhibits the catalyst at an ambient temperature, and a catalyst, which is provided to accelerate a cationic polymerization of the reactive resin mixture, are mixed with one another to form a slot sealing compound (7).

13. Method according to claim 12,
**characterised in that** the conductor arrangement (3) is introduced into the slot (2) and the slot sealing compound (7) is used to seal the slot opening (5) and is heat treated.

14. Method according to claim 13,
**characterised in that** after inserting the slot sealing compound (7) into the slot (2), only the surface of the slot sealing compound (7) is first heat and/or UV treated in respect of a superficial hardening.

15. Method according to one of claims 12 to 14, **characterised in that** the polymerization of the slot sealing compound takes place at a hardening temperature from approx. 70°C.

## Revendications

1. Matière d'obturation de gorge (7) destinée à une machine électrique présentant au moins une gorge (2) munie d'une ouverture de gorge (5) en vue de la réception d'un agencement de conducteur électrique (3), contenant une charge magnétique, en particulier une charge magnétique souple, et un mélange de résine réactionnel, qui présente au moins un composant de résine,
**caractérisée par** un catalyseur conçu pour accélérer une polymérisation cationique du mélange de résine réactionnel, la charge magnétique durcissant ou inhibant le catalyseur à température ambiante.

2. Matière d'obturation de gorge (7) selon la revendication 1,
**caractérisée en ce que** le catalyseur est une substance constituée d'au moins un parmi le groupe des sels d'ammonium, de sulfonium, de phosphonium ou d'imidazolium organique.

3. Matière d'obturation de gorge (7) selon l'une quelconque des revendications précédentes,
**caractérisée en ce que** le catalyseur présente une part en masse inférieure ou égale à 5 % en poids, en particulier inférieure ou égale à 1 % en poids du mélange de résine réactionnel.

4. Matière d'obturation de gorge (7) selon l'une quelconque des revendications précédentes,
**caractérisée en ce que** le composant de résine est une résine époxydique.

5. Matière d'obturation de gorge (7) selon l'une quelconque des revendications précédentes,
**caractérisée par** un additif qui durcit ou inhibe le catalyseur à température ambiante.

6. Matière d'obturation de gorge (7) selon l'une quelconque des revendications précédentes,
**caractérisée en ce que** la matière d'obturation de gorge contient des nanoparticules organiques et/ou minérales en vue de l'amélioration spécifique du comportement d'écoulement du mélange réactionnel et de la résistance au choc de l'obturation de gorge durcie.

7. Matière d'obturation de gorge (7) selon l'une quelconque des revendications précédentes,
**caractérisée par** une température de transition vitreuse supérieure ou égale à 180°C.

8. Matière d'obturation de gorge (7) selon l'une quelconque des revendications précédentes,
**caractérisée par** une part en masse de charge magnétique supérieure ou égale à au moins 85 % en poids.

9. Matière d'obturation de gorge (7) selon l'une quelconque des revendications précédentes,
**caractérisée en ce que** la charge magnétique se présente sous forme de distributions de taille de particule bimodales à multimodales.

10. Matière d'obturation de gorge (7) selon l'une quelconque des revendications précédentes,
**caractérisée par** une stabilité de conservation supérieure à plusieurs jours pour une température allant jusqu'à 45° et/ou une humidité de l'air supérieure à 50 %.

11. Obturation de gorge (6) à partir d'une matière d'obturation de gorge (7) selon l'une quelconque des revendications précédentes.

12. Procédé de fabrication d'une obturation de gorge (6) destinée à une machine électrique présentant au moins une gorge (2) munie d'une ouverture de gorge (5) en vue de la réception d'un agencement de conducteur électrique (3), dans lequel un mélange de résine réactionnel comprend au moins un composant de résine, une charge magnétique, en particulier une charge magnétique souple qui durcit ou inhibe le catalyseur à température ambiante, et un catalyseur conçu pour accélérer une polymérisation cationique du mélange de résine réactionnel, qui sont mélangés les uns avec les autres pour donner une matière d'obturation de gorge (7).

13. Procédé selon la revendication 12,
**caractérisé en ce que** l'agencement de conducteur (3) est introduit dans la gorge (2) et la matière d'obturation de gorge (7) est insérée et traitée thermiquement en vue de l'obturation de l'ouverture de gorge (5).

14. Procédé selon la revendication 13,
**caractérisé en ce que**, après l'insertion de la matière d'obturation de gorge (7) dans la gorge (2), seule la surface de la matière d'obturation de gorge (7) est d'abord traitée thermiquement et/ou par UV en vue d'un durcissement superficiel.

15. Procédé selon l'une quelconque des revendications 12 à 14,
**caractérisé en ce que** la polymérisation de la matière d'obturation de gorge a lieu à une température de durcissement supérieure à environ 70°C.
